# EUROPEAN PATENT APPLICATION

(11) **EP 4 682 601 A1**
(43) Date of publication of application: **21.01.2026**
(21) Application number: 24214387.3
(22) Date of filing: 21.11.2024
(51) Int. Cl.: G02B 6/12

(54) **PHOTONIC CHIPS INCLUDING A PHOTONIC COMPONENT AND DELAY LINES**

(30) Priority: 15.07.2024 US 202418772463
(71) Applicant: GlobalFoundries U.S. Inc., Malta, NY 12020 (US)
(72) Inventor: CHANDRAN, Sujith, Malta, NY, 12020 (US); BIAN, Yusheng, Malta, NY, 12020 (US); LEE, Won Suk, Malta, NY, 12020 (US); ABOKETAF, Abdelsalam, Essex Junction, VT, 05452 (US)
(74) Representative: Lambacher, Michael

(57) **Abstract**

Structures for a photonic chip that include a photonic component and delay lines and methods of forming such structures. The structure comprises a photonic component, a first waveguide core including a section coupled to the photonic component, and a second waveguide core including a section coupled to the photonic component. The section of the first waveguide core has a first length, and the section of the second waveguide core having a second length that is greater than the first length.

## Description

### BACKGROUND

This disclosure relates to photonic chips and, more specifically, to structures for a photonic chip that include a photonic component and delay lines and methods of forming such structures.

Photonic chips are used in many applications and systems including, but not limited to, data communication systems and data computation systems. A photonic chip includes a photonic integrated circuit comprised of photonic components, such as modulators, polarizers, and couplers, that are used to manipulate light received from a light source, such as an optical fiber or a laser. A photodetector may be employed in the photonic integrated circuit to convert light, which may be modulated as an optical signal, into an electrical signal.

Improved structures for a photonic chip that include a photonic component and delay lines and methods of forming such structures are needed.

### SUMMARY

In an embodiment of the invention, a structure for a photonic chip is provided. The structure comprises a photonic component, a first waveguide core including a first section coupled to the photonic component, and a second waveguide core including a first section coupled to the photonic component. The first section of the first waveguide core has a first length, and the first section of the second waveguide core has a second length that is greater than the first length.

The photonic component may be a photodetector that includes an anode, a cathode, and a semiconductor layer configured to absorb light of a given wavelength. Alternatively, the photonic component may be an absorber that includes a semiconductor layer configured to absorb light of a given wavelength. According to one implementation, the absorber may include a spiral section comprising a semiconductor material configured to absorb light of a given wavelength.

Further, the first waveguide core may include a second section that couples the first section of the first waveguide core to the photodetector or to the absorber; further, the second waveguide core may include a second section that couples the first section of the second waveguide core to the photodetector or to the absorber.

Further, the semiconductor layer may be disposed laterally between the second section of the first waveguide core and the second section of the second waveguide core; further, the semiconductor layer may include a first chamfered surface adjacent to the second section of the first waveguide core; further, the semiconductor layer may include a second chamfered surface adjacent to the second section of the second waveguide core.

Further, the first waveguide core may include a third section connected to the first section of the first waveguide core, and the second waveguide core may include a third section connected to the first section of the second waveguide core, and the structure may further comprise: a third waveguide core including a section disposed laterally between the third section of the first waveguide core and the third section of the second waveguide core.

Further, the first section of the first waveguide core and the first section of the second waveguide core may have a length difference between the first length and the second length that is configured to cause propagating light to have a phase difference equal to pi or a multiple of pi.

In addition to the above features, the structure may further comprise a first thermo-optic phase shifter associated with a portion of the first section of the second waveguide core; and/or a second thermo-optic phase shifter associated with a portion of the first section of the first waveguide core. Alternatively, the structure may further comprise a first electro-optic phase shifter associated with a portion of the first section of the second waveguide core; and/or a second electro-optic phase shifter associated with a portion of the first section of the first waveguide core.

In addition to the above features, the structure may further comprise a first multi-mode interference coupler having an output port coupled to the first section of the second waveguide core; further, the structure may comprise a second multi-mode interference coupler having an output port coupled to an input port of the first multi-mode interference coupler.

In addition to the above features, the structure may further comprise: a third waveguide core including a section coupled to the photonic component, the section of the third waveguide core having a third length; and a fourth waveguide core including a section coupled to the photonic component, the section of the fourth waveguide core having a fourth length that is greater than the third length.

In an embodiment of the invention, a method of forming a structure for a photonic chip is provided. The method comprises forming a photonic component, forming a first waveguide core including a first section coupled to the photonic component, and forming a second waveguide core including a first section coupled to the photonic component. The first section of the first waveguide core has a first length, and the first section of the second waveguide core has a second length that is greater than the first length.

### BRIEF DESCRIPTION OF THE DRAWINGS

The accompanying drawings, which are incorporated in and constitute a part of this specification, illustrate various embodiments of the invention and, together with a general description of the invention given above and the detailed description of the embodiments given below, serve to explain the embodiments of the invention. In the drawings, like reference numerals refer to like features in the various views.
FIG. 1 is a top view of a structure at an initial fabrication stage of a processing method in accordance with embodiments of the invention.
FIG. 2 is a cross-sectional view taken generally along line 2-2 in FIG. 1.
FIG. 2A is a cross-sectional view taken generally along line 2A-2A in FIG. 1.
FIG. 2B is a cross-sectional view taken generally along line 2B-2B in FIG. 1.
FIGS. 3, 3A, 3B are cross-sectional views of the structure at a fabrication stage of the processing method subsequent to FIGS. 1, 2, 2A, 2B.
FIG. 4 is a top view of a structure in accordance with embodiments of the invention.
FIG. 5 is a top view of a structure in accordance with embodiments of the invention.
FIG. 5A is a cross-sectional view taken generally along line 5A-5A in FIG 5.
FIG. 6 is a top view of a structure in accordance with embodiments of the invention.
FIG. 7 is a top view of a structure in accordance with embodiments of the invention.
FIG. 8 is a top view of a structure in accordance with embodiments of the invention.
FIG. 9 is a top view of a structure in accordance with embodiments of the invention.
FIG. 10 is a diagrammatic view of a structure in accordance with embodiments of the invention.
FIG. 11 is a diagrammatic view of a structure in accordance with embodiments of the invention.

### DETAILED DESCRIPTION

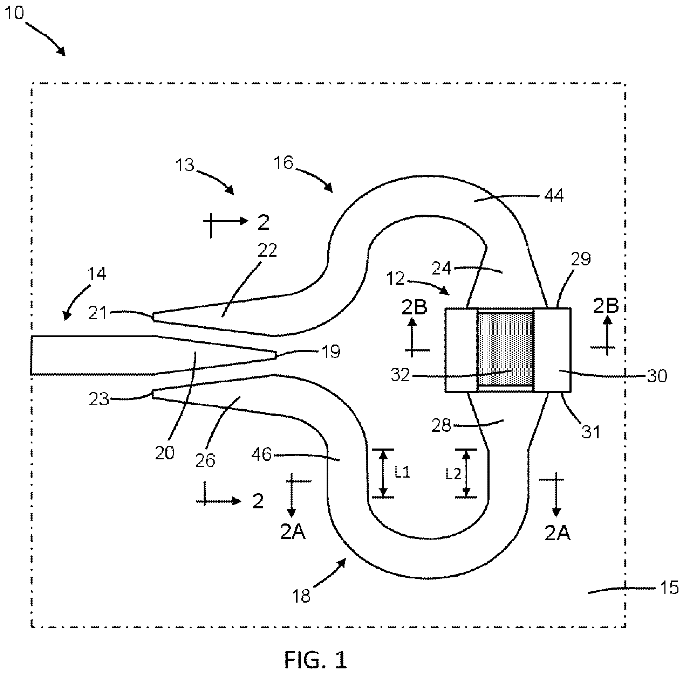

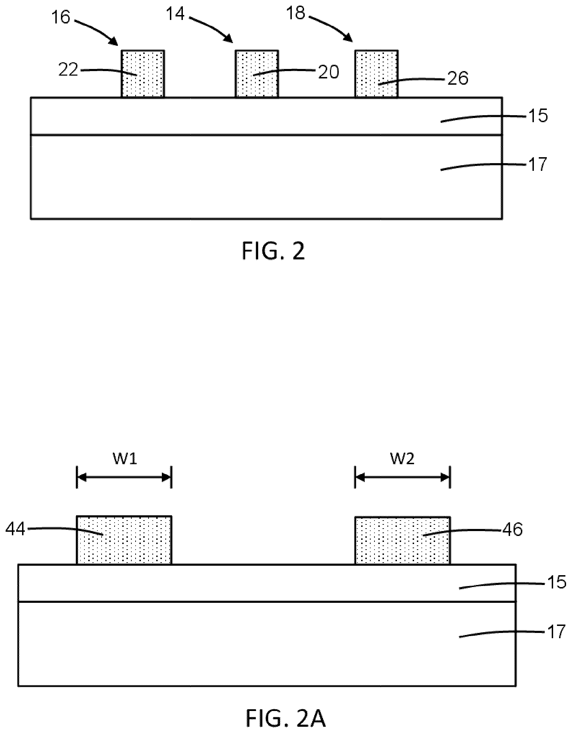

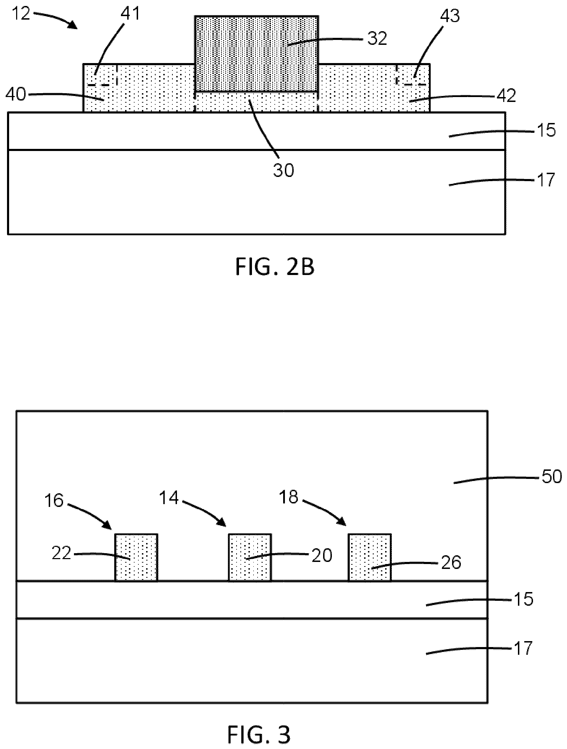

With reference to FIGS. 1, 2, 2A, 2B and in accordance with embodiments of the invention, a structure 10 for a photonic chip includes a photodetector 12 and a coupler 13 that connects a waveguide core 14 to the photodetector 12. The coupler 13 includes a waveguide core 16 and a waveguide core 18 that are separately routed as arms of the coupler 13 to the photodetector 12. The photodetector 12, the waveguide core 14, and the waveguide cores 16, 18 of the coupler 13 are positioned on, and above, a dielectric layer 15 and a semiconductor substrate 17. In an embodiment, the dielectric layer 15 may be comprised of a dielectric material, such as silicon dioxide, and the semiconductor substrate 17 may be comprised of a semiconductor material, such as single-crystal silicon. In an embodiment, the dielectric layer 15 may be a buried oxide layer of a silicon-on-insulator substrate, and the dielectric layer 15 may provide low-index and electrically-insulating cladding that separates the waveguide cores 14, 16, 18 and the photodetector 12 from the semiconductor substrate 17.

The waveguide core 14 includes a section 20 that terminates at an end 19. The section 20 may be tapered with a width dimension that increases with increasing distance from the terminating end 19. In an embodiment, the width dimension of the section 20 may increase linearly with increasing distance from the end 19. In an alternative embodiment, the width dimension of the section 20 may vary based on a non-linear function, such as a quadratic function, a cubic function, a parabolic function, a sine function, a cosine function, a Bezier function, or an exponential function. In an embodiment, the section 20 may include a single stage of tapering characterized by a taper angle. In an alternative embodiment, the section 20 may taper in multiple stages each characterized by a different taper angle.

The waveguide core 16 includes a section 22 that is disposed adjacent to the section 20 of the waveguide core 14 and a section 24 that is disposed adjacent to the photodetector 12. The waveguide core 16 may include a series of bends that route the waveguide core 16 from the section 22 to the section 24. The waveguide core 18 includes a section 26 that is disposed adjacent to the section 20 of the waveguide core 14 and a section 28 that is disposed adjacent to the photodetector 12. The waveguide core 18 may include a series of bends between the section 26 and the section 28 that route the waveguide core 18 from the section 26 to the section 28.

The section 22 of the waveguide core 16 may be terminated by an end 21, and the section 22 may be tapered with a width dimension that increases with increasing distance from the terminating end 21. In an embodiment, the width dimension of the section 22 may increase linearly with increasing distance from the end 21. In an alternative embodiment, the width dimension of the section 22 may vary based on a non-linear function, such as a quadratic function, a cubic function, a parabolic function, a sine function, a cosine function, a Bezier function, or an exponential function. In an embodiment, the section 22 may include a single stage of tapering characterized by a taper angle. In an alternative embodiment, the section 22 may taper in multiple stages each characterized by a different taper angle.

The section 26 of the waveguide core 16 may be terminated by an end 23, and the section 26 may be tapered with a width dimension that increases with increasing distance from the terminating end 23. In an embodiment, the width dimension of the section 26 may increase linearly with increasing distance from the end 23. In an alternative embodiment, the width dimension of the section 26 may vary based on a non-linear function, such as a quadratic function, a cubic function, a parabolic function, a sine function, a cosine function, a Bezier function, or an exponential function. In an embodiment, the section 26 may include a single stage of tapering characterized by a taper angle. In an alternative embodiment, the section 26 may taper in multiple stages each characterized by a different taper angle.

The width dimension of the section 20 increases in an opposite direction from the width dimension of the section 22 and in an opposite direction from the width dimension of the section 26. In an embodiment, the length L of the section 20 may be substantially equal to the length dimension of the section 22 and the length dimension of the section 26. The section 20 of the waveguide core 14 has a sidewall is separated from an adjacent sidewall of the section 22 of the waveguide core 16 by a gap. The section 20 of the waveguide core 14 has a sidewall that is separated from an adjacent sidewall of the section 26 of the waveguide core 18 by a gap.

A portion of the light propagating in the waveguide core 14 may be transferred as optical power across the gap between the section 20 of the waveguide core 14 and the section 22 of the waveguide core 16, and a portion of the light propagating in the waveguide core 14 may be transferred as optical power across the gap between the section 20 of the waveguide core 14 and the section 26 of the waveguide core 18. The splitting ratio for the transferred light may be selected by adjusting factors, such as the dimensions of the gaps. In an embodiment, the transferred optical power may be split evenly between the section 22 and the section 26.

The photodetector 12 includes a pad 30 and a semiconductor layer 32 that is disposed on the pad 30. The section 24 of the waveguide core 16, which is butt coupled to the photodetector 12, adjoins a side edge 29 of the pad 30. The section 28 of the waveguide core 18, which is butt coupled to the photodetector 12, adjoins a side edge 31 of the pad 30. In an embodiment, the side edge 29 may be opposite from the side edge 31, and the semiconductor layer 32 may be disposed on the pad 30 between the side edge 29 and the side edge 31 and, therefore, between the section 24 of the waveguide core 16 and the section 28 of the waveguide core 18.

The section 24 of the waveguide core 16 may be tapered with a width dimension that increases with decreasing distance from the side edge 29 of the pad 30 and the semiconductor layer 32. In an embodiment, the width dimension of the section 24 may increase linearly with decreasing distance from the side edge 29 of the pad 30 and the semiconductor layer 32. In an alternative embodiment, the width dimension of the section 24 may vary based on a non-linear function, such as a quadratic function, a cubic function, a parabolic function, a sine function, a cosine function, a Bezier function, or an exponential function. In an embodiment, the section 24 may include a single stage of tapering characterized by a taper angle. In an alternative embodiment, the section 24 may taper in multiple stages each characterized by a different taper angle.

The section 28 of the waveguide core 18 may be tapered with a width dimension that increases with decreasing distance from the side edge 31 of the pad 30 and the semiconductor layer 32. In an embodiment, the width dimension of the section 28 may decrease linearly with increasing distance from the side edge 31 of the pad 30 and the semiconductor layer 32. In an alternative embodiment, the width dimension of the section 28 may vary based on a non-linear function, such as a quadratic function, a cubic function, a parabolic function, a sine function, a cosine function, a Bezier function, or an exponential function. In an embodiment, the section 28 may include a single stage of tapering characterized by a taper angle. In an alternative embodiment, the section 28 may taper in multiple stages each characterized by a different taper angle.

The waveguide core 16 includes a section 44 that is arranged along the length of the waveguide core 16 between the section 22 and the section 24, and the waveguide core 18 includes a section 46 that is arranged along the length of the waveguide core 18 between the section 26 and the section 28. The section 46 of the waveguide core 18 includes a portion of length L1 and a portion of length L2. In an embodiment, the length L1 may be equal to the length L2. The section 46 of the waveguide core 18 is longer than the section 44 of the waveguide core 16 by a difference equal to the sum of the length L1 and the length L2. One of the portions of the section 46 has cross-sectional profile with a width dimension W1, and the other of the portions of the section 46 has cross-sectional profile with a width dimension W2. In an embodiment, the width dimension W1 and the width dimension W2 may be equal. In an embodiment, the width dimension W1 and the width dimension W2 may be unequal.

The portion of length L1 and the portion of length L2 increase the optical path for light propagating in the section 46 of the waveguide core 18 between the section 26 and the section 28 in comparison to the optical path for light propagating in the section 44 of the waveguide core 16 between the section 22 and the section 24. The result is a length difference in which the optical path in the section 46 of the waveguide core 18 is greater than the optical path in the section 44 of the waveguide core 16.

A portion of the light propagating in the waveguide core 16 may be reflected by the interface between the section 24 and the photodetector 12. The reflected light returns as optical return loss through the waveguide core 16 to the section 22 and is transferred to the section 20 of the waveguide core 14. A portion of the light propagating in the waveguide core 18 may be reflected by the interface between the section 28 and the photodetector 12. The reflected light returns as optical return loss through the waveguide core 18 to the section 26 and is transferred to the section 20 of the waveguide core 14.

The length difference between the optical path in the section 44 and the optical path in the section 46 may introduce a phase difference between the reflected light propagating in the waveguide core 16 to the section 22 and the reflected light propagating in the waveguide core 18 to the section 26. In an embodiment, the phase difference may be equal to pi or a multiple of pi. The phase difference between the reflected light results in destructive interference, which may cancel or eliminate reflected light from propagating in waveguide core 14 away from the structure 10.

In an embodiment, the waveguide cores 14, 16, 18 and the pad 30 of the photodetector 12 may be comprised of a material having a refractive index that is greater than the refractive index of silicon dioxide. In an embodiment, the waveguide cores 14, 16, 18 and the pad 30 of the photodetector 12 may be comprised of a semiconductor material. In an embodiment, the waveguide cores 14, 16, 18 and the pad 30 of the photodetector 12 may be comprised of single-crystal silicon. The waveguide cores 14, 16, 18 and the pad 30 of the photodetector 12 may be formed by patterning a layer comprised of their constituent material with lithography and etching processes. In an embodiment, the waveguide cores 14, 16, 18 and the pad 30 of the photodetector 12 may be formed by patterning the semiconductor material (e.g., single-crystal silicon) of a device layer of a silicon-on-insulator substrate. In an alternative embodiment, the waveguide core 14 may be formed later in the process flow and may be comprised of a material, such as a dielectric material like silicon nitride, that differs from the material of the waveguide cores 16, 18 and the pad 30.

The semiconductor layer 32 of the photodetector 12 may be comprised of a light-absorbing material that is configured to absorb light of a given wavelength and to generate charge carriers from photons of the absorbed light by photoelectric conversion. In an embodiment, the semiconductor layer 32 may be comprised of a different material from the waveguide cores 14, 16, 18 and the pad 30. In an embodiment, the semiconductor layer 32 may be comprised of a material having a composition that includes germanium. In an embodiment, the semiconductor layer 32 may be comprised of intrinsic germanium. In an alternative embodiment, the semiconductor layer 32 may be comprised of a different light-absorbing material, such as a III-V compound semiconductor material or silicon.

The semiconductor layer 32 may be formed by an epitaxial growth process. In an embodiment, the semiconductor layer 32 may be epitaxially grown inside a trench that is patterned in the pad 30 such that the semiconductor layer 32 includes a lower portion disposed below a top surface of the pad 30 and an upper portion disposed above the top surface of the pad 30. In an alternative embodiment, the semiconductor layer 32 may be formed on the top surface of the pad 30, instead of inside a trench, such that the semiconductor layer 32 is disposed fully above the top surface. In this regard, the semiconductor layer 32 may be grown from the top surface of the pad 30 and then patterned by lithography and etching processes.

The photodetector 12 may include a doped region 40 and a doped region 42 that are formed in respective portions of the pad 30. The doped regions 40, 42, which may differ in conductivity type, may extend through the entire thickness of the pad 30 to the underlying dielectric layer 15. The semiconductor layer 32 is laterally positioned between the doped region 40 and the doped region 42. The doped region 40 and the doped region 42 may respectively define an anode and a cathode of the photodetector 12.

The doped region 40 may be formed by, for example, ion implantation with an implantation mask having an opening that determines the implanted area of the pad 30. The implantation mask may include a layer of photoresist applied by a spin-coating process, prebaked, exposed to light projected through a photomask, baked after exposure, and developed with a chemical developer to define the opening over the area of the pad 30 to be implanted. The implantation conditions, such as ion species, dose, and kinetic energy, may be selected to tune the electrical and physical characteristics of the doped region 40. The implantation mask may be stripped after forming the doped region 40. In an embodiment, the semiconductor material of the doped region 40 may contain a p-type dopant, such as boron, that provides p-type electrical conductivity. In an alternative embodiment, a portion of the semiconductor layer 32 immediately adjacent to the doped region 40 and an underlying portion of the pad 30 may be implanted with the p-type dopant due to overlap of the opening in the implantation mask.

The doped region 42 may be formed by, for example, ion implantation with an implantation mask with an opening that determines an implanted area of the pad 30. The implantation mask may include a layer of photoresist applied by a spin-coating process, prebaked, exposed to light projected through a photomask, baked after exposure, and developed with a chemical developer to define the opening over the area of the pad 30 to be implanted. The implantation conditions, such as ion species, dose, and kinetic energy, may be selected to tune the electrical and physical characteristics of the doped region 42. The implantation mask may be stripped after forming the doped region 42. In an embodiment, the semiconductor material of the doped region 42 may contain an n-type dopant, such as phosphorus or arsenic, that provides n-type electrical conductivity. In an alternative embodiment, a portion of the semiconductor layer 32 immediately adjacent to the doped region 42 and an underlying portion of the pad 30 may be implanted with the n-type dopant due to overlap of the opening in the implantation mask.

A portion of the pad 30 beneath the semiconductor layer 32 may be comprised of intrinsic semiconductor material, such as intrinsic silicon, that is not doped by the ion implantations forming the doped regions 40, 42. In an embodiment, the intrinsic portion of the pad 30 may extend from the side edge 29 of the pad 30 to the side edge 31 of the pad 30. The doped region 40, the intrinsic semiconductor materials of the semiconductor layer 32 and the portion of the pad 30 beneath the semiconductor layer 32, and the doped region 42 may define a lateral p-i-n diode structure that provides the functionality of the photodetector 12.

A heavily-doped region 41 may be formed by a masked ion implantation in a portion of the doped region 40. The heavily-doped region 41 may be doped to the same conductivity type as the doped region 40 but at a higher dopant concentration. A heavily-doped region 43 may be formed by a masked ion implantation in a portion of the doped region 42. The heavily-doped region 43 may be doped to the same conductivity type as the doped region 42 but at a higher dopant concentration.

In an alternative embodiment, the photodetector 12 may have a vertical arrangement instead of a lateral arrangement. Specifically, in the vertical arrangement, the doped region 40 and heavily-doped region 41 may be arranged in the pad 30 on both sides of the semiconductor layer 32, and the doped region 42 and heavily-doped region 43 may be arranged in the upper portion of the semiconductor layer 32. In an alternative embodiment, the structure 10 may be configured with the doped region 40 in the pad 30 only adjacent to one side of the semiconductor layer 32 instead of both sides. In an alternative embodiment, the photodetector 12 may be configured as an avalanche photodetector that includes an intrinsic semiconductor region in the pad 30 defining a multiplication region and an additional doped region in the pad 30 defining a charge control region.

In an alternative embodiment, the photodetector 12 may be replaced by a different type of photonic component that is coupled to the waveguide cores 16, 18. In an alternative embodiment, the section 24 of the waveguide core 16 and the section 28 of the waveguide core 18 may be oppositely tapered and terminate adjacent to one side of the photodetector 12, instead of being butt coupled to the photodetector 12, such that light is laterally transferred by side coupling to the semiconductor layer 32 of the photodetector 12. In an alternative embodiment, the optical coupler including the section 20, the section 22, and the section 26 may be replaced by a multiple-mode interference optical coupler. In an alternative embodiment, the photodetector 12 may omit the doped regions 40, 42 and the semiconductor layer 32 may function as a light absorber. In an alternative embodiment, the section 24 and the section 28 may be angled relative to their interfaces with the side edges 29, 31 of the photodetector 12 to further reduce optical return loss.

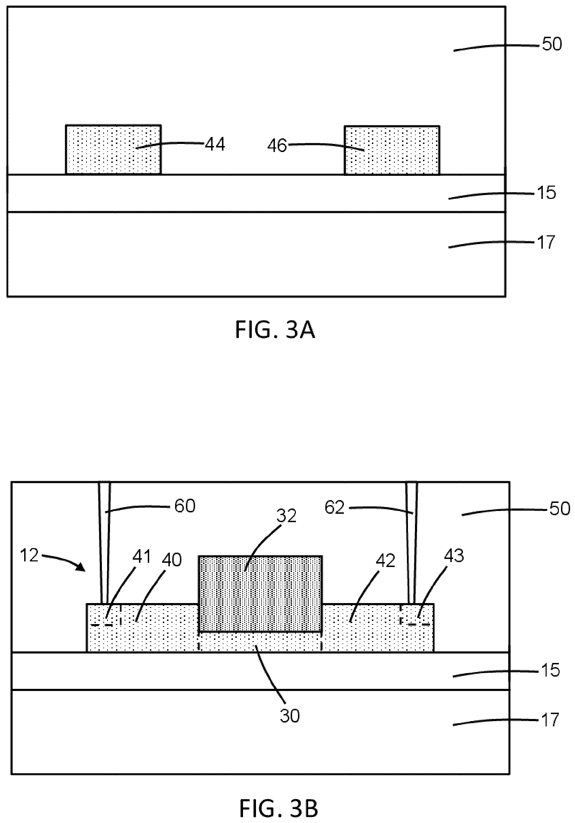

With reference to FIGS. 3, 3A, 3B in which like reference numerals refer to like features in FIGS. 1, 2, 2A, 2B and at a subsequent fabrication stage, a dielectric layer 50 may be formed over the photodetector 12 and waveguide cores 14, 16, 18. The dielectric layer 50 may be comprised of a dielectric material, such as silicon dioxide, having a refractive index that is less than the refractive index of the material constituting the waveguide cores 14, 16, 18.

Contacts 60 may be formed in the dielectric layer 50 that penetrate through the dielectric layer 50 to land on the heavily-doped region 41, and contacts 62 may be formed in the dielectric layer 50 that that penetrate through the dielectric layer 50 to land on the heavily-doped region 43. The heavily-doped region 41 electrically couples the contacts 60 to the doped region 40. The heavily-doped region 43 electrically couples the contacts 60 to the doped region 42. The contacts 60, 62 may be comprised of a metal, such as tungsten. The doped regions 40, 42 of the photodetector 12 may be electrically biased through the heavily-doped regions 41, 43 and the contacts 60, 62.

In use, light (e.g., laser light) propagates in the waveguide core 14 toward the section 20 and is coupled from the section 20 of the waveguide core 14 to the section 22 of the waveguide core 16 and to the section 26 of the waveguide core 18 with a given splitting ratio associated with a photonic coupler. The section 44 of the waveguide core 16 routes the transferred light from the section 22 to the section 24 for input to the photodetector 12. The section 46 of the waveguide core 18 routes the transferred light from the section 26 to the section 28 of the waveguide core 18 for input to the photodetector 12. In an embodiment, the light routed to the photodetector 12 may be modulated as an optical signal. The semiconductor layer 32 of the photodetector 12 absorbs photons of the light and converts the absorbed photons into charge carriers by photoelectric conversion. The biasing of the doped regions 40, 42 causes the charge carriers to be collected and output through the contacts 60, 62 to provide, as a function of time, a measurable photocurrent.

A portion of the light is reflected at the interface between the photodetector 12 and the section 24 of the waveguide core 16. A portion of the light is reflected at the interface between the photodetector 12 and the section 28 of the waveguide core 18. Reflected light returning in the waveguide core 16 to the section 22 and reflected light returning in the waveguide core 18 to the section 26 may have a phase difference of pi or a multiple of pi arising from the section 46 of the waveguide core 18 being longer than the section 44 of the waveguide core 16. The phase difference causes the reflected light returned by the section 46 of the waveguide core 18 to the section 26 to destructively interfere, when combined in the section 20 of the waveguide core 14, with the reflected light returned by the section 44 of the waveguide core 16 to the section 22. The destructive interference may cancel or eliminate reflected light that would otherwise propagate in waveguide core 14 away from the structure 10.

In an embodiment, the phase difference resulting in destructive interference may be optimized for light with transverse electric polarization. In an embodiment, the phase difference resulting in destructive interference may be optimized for light with transverse magnetic polarization. In an embodiment, the phase difference resulting in destructive interference may be optimized for light with a mixture of transverse magnetic polarization and transverse electric polarization. In an embodiment, the phase difference resulting in destructive interference may be optimized for light with the fundamental mode and higher-order modes with transverse electric polarization and/or transverse magnetic polarization.

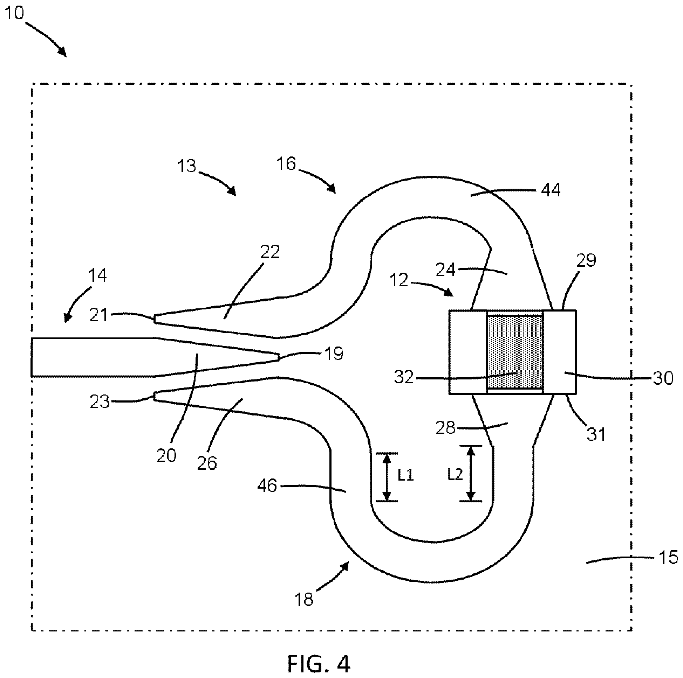

With reference to FIG. 4 and in accordance with alternative embodiments, the section 46 of the waveguide core 18 may be modified such that the length L1 and the length L2 of the portions of the section 46 are unequal. In an embodiment, the length L2 may be greater than the length L1.

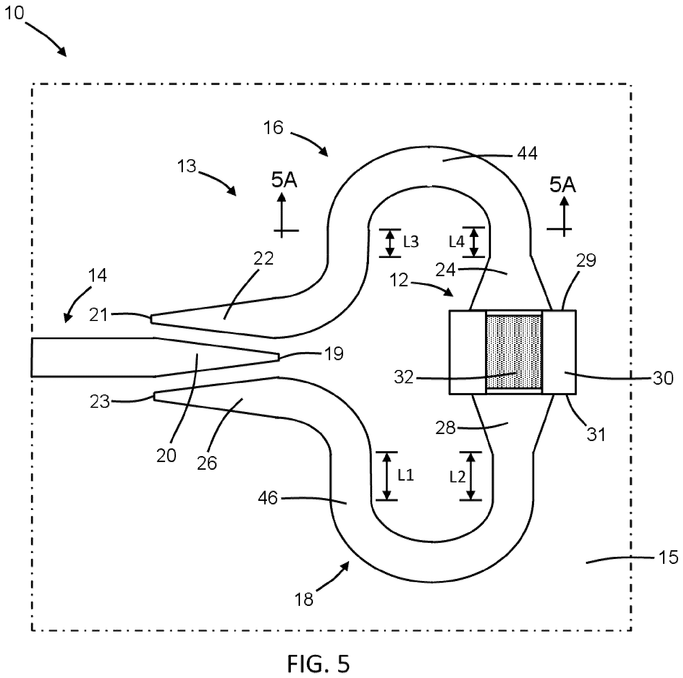

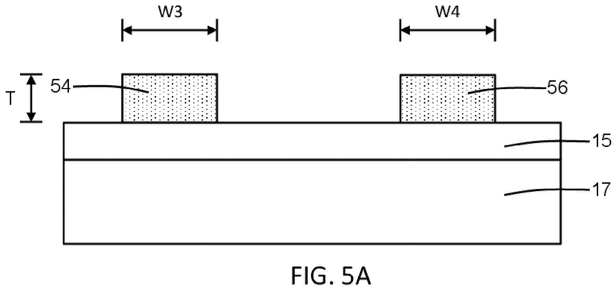

With reference to FIGS. 5, 5A and in accordance with alternative embodiments, the structure 10 may be modified such that the section 44 of the waveguide core 16 includes a portion of length L3 and a portion of length L4. In an embodiment, the length L3 and the length L4 may be equal. In an embodiment, the length L3 and the length L4 may be unequal. The sum of the lengths L3, L4 may differ from the sum of the lengths L1, L2 such that the phase difference (e.g., pi or a multiple of pi) providing the destructive interference of reflected light is preserved. One of the portions of the section 44 has cross-sectional profile with a width dimension W3, and the other of the portions of the section 44 has cross-sectional profile with a width dimension W4. In an embodiment, the width dimension W3 and the width dimension W4 may be equal. In an embodiment, the width dimension W3 and the width dimension W4 may be unequal.

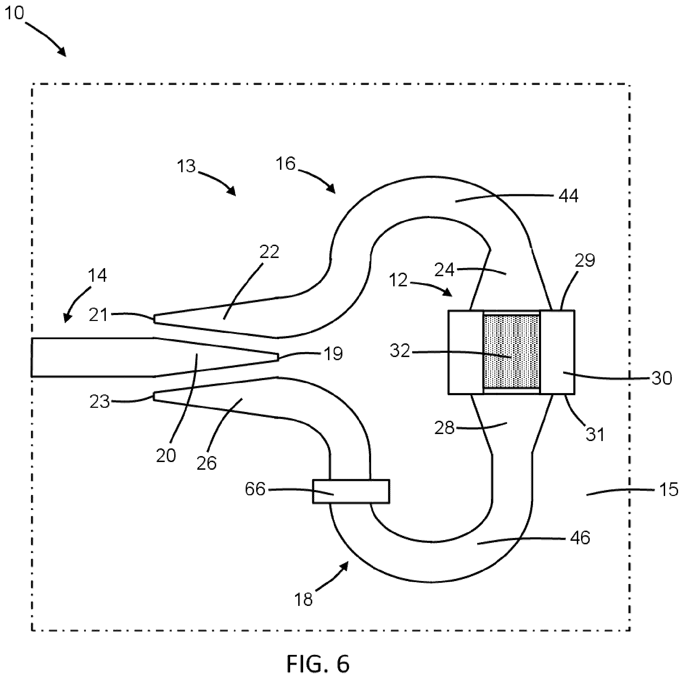

With reference to FIG. 6 and in accordance with alternative embodiments, a phase shifter 66 may be added to the waveguide core 18 and used as a mechanism to further adjust the phase difference of reflected light in conjunction with the section 46 of the waveguide core 18 that is lengthened relative to the section 44 of the waveguide core 16. In an embodiment, the phase shifter 66 may be a thermo-optic phase shifter that includes a resistive heater that changes the temperature of a portion of the waveguide core 18 to provide the phase shift adjustment through the thermo-optic coefficient of the material of the waveguide core 18. In an embodiment, the phase shifter 66 may be an electro-optic phase shifter that includes a p-n junction in the section 46 that is biased to provide the phase shift adjustment through an electro-optic response of the material of the waveguide core 18.

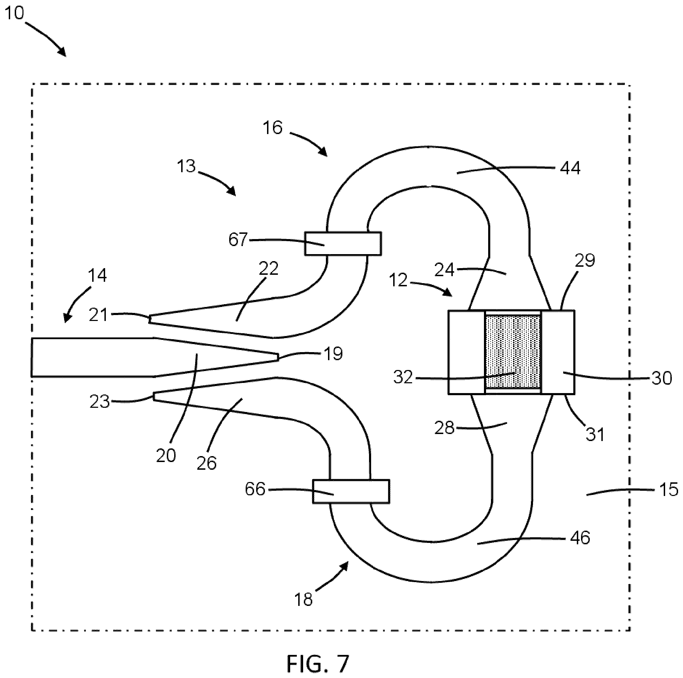

With reference to FIG. 7 and in accordance with alternative embodiments, a phase shifter 67 may be added to the waveguide core 16 and used as a mechanism, along with the phase shifter 66, to further adjust the phase difference of reflected light in conjunction with the section 44. In an embodiment, the phase shifter 66 may be a thermo-optic phase shifter that includes a resistive heater that changes the temperature of a portion of the section 44 of the waveguide core 16 to provide the phase shift adjustment through the thermo-optic coefficient of the material of the waveguide core 16. In an embodiment, the phase shifter 67 may be an electro-optic phase shifter that includes a p-n junction in the section 44 that is biased to provide the phase shift adjustment through an electro-optic response of the material of the waveguide core 16.

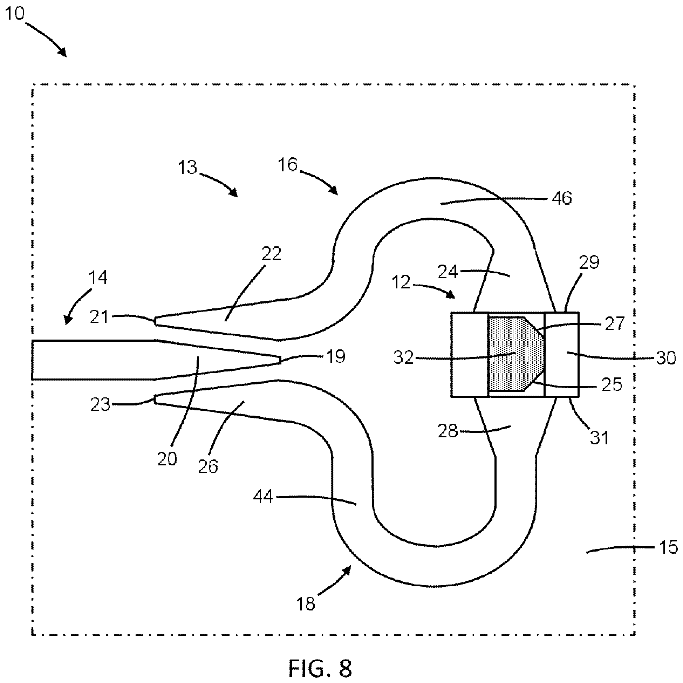

With reference to FIG. 8 and in accordance with alternative embodiments, the semiconductor layer 32 of the photodetector 12 may include one or more chamfered surfaces 27 that are arranged adjacent to the section 24 and the side edge 29 of the pad 30. The semiconductor layer 32 of the photodetector 12 may include one or more chamfered surfaces 25 that are arranged adjacent to the section 28 and the side edge 31 of the pad 30. The chamfered surfaces 27 and the chamfered surfaces 25 may reduce the reflected light from the interfaces between the photodetector 12 and the sections 24, 28.

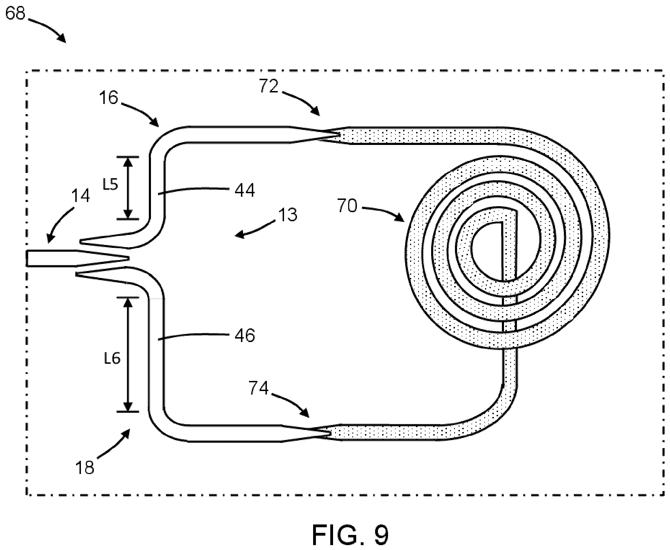

With reference to FIG. 9 and in accordance with alternative embodiments, a structure 68 may include an absorber 70 having a spiral section comprised of a material that is capable of absorbing light, an arm coupling the spiral section to the section 44 of the waveguide core 16 through an optical coupler 72, and an arm coupling the spiral section to the section 46 of the waveguide core 18 through an optical coupler 74. Light is absorbed in the spiral section of the absorber 70, which may be comprised of a material such as silicon, silicon nitride, or germanium. The optical coupler 72 may include a tapered section of the waveguide core 16 that overlaps with a tapered section of one arm of the absorber 70 for vertical light coupling. The optical coupler 74 may include a tapered section of the waveguide core 18 that overlaps with a tapered section of the other arm of the absorber 70 for vertical light coupling. The difference in the length L5 of the section 44 of the waveguide core 16 and the length L6 of the section 46 of the waveguide core 18 provide for a phase difference enabling destructive interference of light reflected from the optical couplers 72, 74.

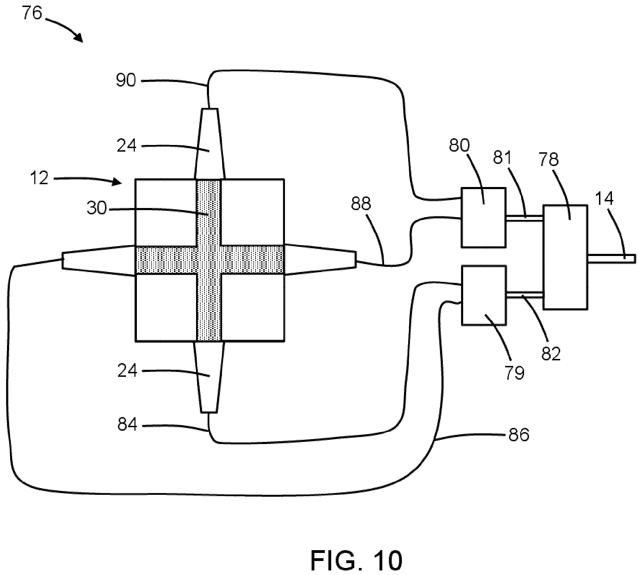

With reference to FIG. 10 and in accordance with alternative embodiments, a structure 76 may include the photodetector 12, multi-mode interference couplers 78, 79, 80, a waveguide core 82 that connects an output from the multi-mode interference coupler 78 to the multi-mode interference coupler 79, a waveguide core 81 that connects the multi-mode interference coupler 78 to the multi-mode interference coupler 80, waveguide cores 84, 86 that connect the multi-mode interference coupler 79 to the photodetector 12, and waveguide cores 88, 90 that connect the multi-mode interference coupler 80 to the photodetector 12. Each of the multi-mode interference couplers 78, 79, 80 includes a multi-mode interference region with an input port and a pair of output ports.

The waveguide core 84 includes a section 24 that transfers light to the photodetector 12 and a section that connects an output from the multi-mode interference coupler 79 to the section 24. Reflected light is generated at the interface between the section 24 and the photodetector 12 and propagates in the waveguide core 84 back to the multi-mode interference coupler 79. The waveguide core 86 includes a section 24 that transfers light to the photodetector 12 and a section that connects an output from the multi-mode interference coupler 79 to the section 24. Reflected light is generated at the interface between the section 24 and the photodetector 12 and propagates in the waveguide core 86 back to the multi-mode interference coupler 79. The length of the section of the waveguide core 84 between the associated section 24 and the multi-mode interference coupler 79 and length of the waveguide core 86 between the associated section 24 and the multi-mode interference coupler 79 may be selected to provide a phase difference of pi or a multiple of pi for light reflected by the interfaces between the sections 24 and the photodetector 12. The reflected light constructively interferes when combined at the multi-mode interference coupler 79.

The waveguide core 88 includes a section 24 that transfers light to the photodetector 12 and a section that connects an output from the multi-mode interference coupler 80 to the section 24. Reflected light is generated at the interface between the section 24 and the photodetector 12 and propagates in the waveguide core 88 back to the multi-mode interference coupler 80. The waveguide core 90 includes a section 24 that transfers light to the photodetector 12 and a section that connects an output from the multi-mode interference coupler 80 to the section 24. Reflected light is generated at the interface between the section 24 and the photodetector 12 and propagates in the waveguide core 90 back to the multi-mode interference coupler 80. The length of the section of the waveguide core 88 between the associated section 24 and the multi-mode interference coupler 80 and length of the waveguide core 90 between the associated section 24 and the multi-mode interference coupler 80 may be selected to provide a phase difference of pi or a multiple of pi for light reflected by the interfaces between the sections 24 and the photodetector 12. The reflected light constructively interferes when combined at the multi-mode interference coupler 80.

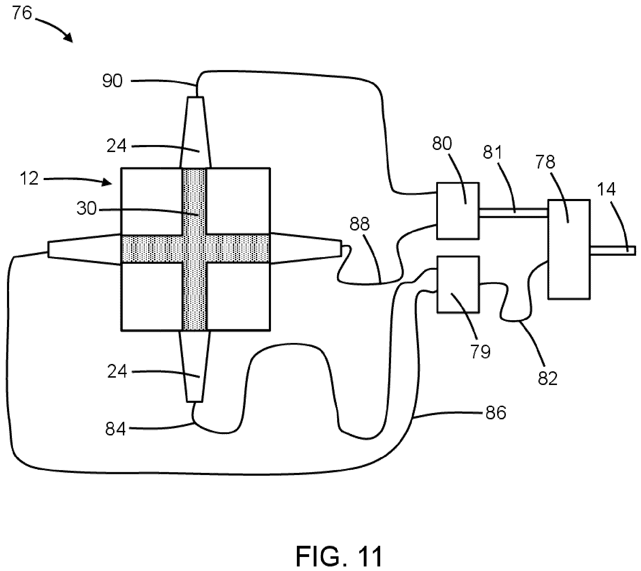

With reference to FIG. 11 and in accordance with alternative embodiments, the respective lengths of the waveguide core 84 and the waveguide core 86 may be balanced such that a phase difference is absent for reflected light, and the respective lengths of the waveguide core 88 and the waveguide core 90 may be balanced such that a phase difference is absent for reflected light. Instead, the length of the waveguide core 82 may be selected to be longer than the length of the waveguide core 81 in order to provide a phase difference of pi or a multiple of pi for light reflected from the sections 24 that connect the waveguide cores 84, 86, 88, 90 to the photodetector 12 relative to the length of the waveguide core 81. The reflected light constructively interferes when combined at the multi-mode interference coupler 78.

In an alternative embodiment, the length of the section of the waveguide core 84 between the associated section 24 and the multi-mode interference coupler 79 and the length of the waveguide core 86 between the associated section 24 and the multi-mode interference coupler 79 may also be selected to provide a phase difference of pi or a multiple of pi for light reflected by the interfaces between the sections 24 and the photodetector 12. In an alternative embodiment, the length of the section of the waveguide core 88 between the associated section 24 and the multi-mode interference coupler 80 and length of the waveguide core 90 between the associated section 24 and the multi-mode interference coupler 80 may also be selected to provide a phase difference of pi or a multiple of pi for light reflected by the interfaces between the sections 24 and the photodetector 12.

The methods as described above are used in the fabrication of integrated circuit chips. The resulting integrated circuit chips can be distributed by the fabricator in raw wafer form (e.g., as a single wafer that has multiple unpackaged chips), as a bare die, or in a packaged form. The chip may be integrated with other chips, discrete circuit elements, and/or other signal processing devices as part of either an intermediate product or an end product. The end product can be any product that includes integrated circuit chips, such as computer products having a central processor or smartphones.

References herein to terms modified by language of approximation, such as "about", "approximately", and "substantially", are not to be limited to the precise value or precise condition as specified. In embodiments, language of approximation may indicate a range of +/-10% of the stated value(s) or the stated condition(s).

References herein to terms such as "vertical", "horizontal", etc. are made by way of example, and not by way of limitation, to establish a frame of reference. The term "horizontal" as used herein is defined as a plane parallel to a conventional plane of a semiconductor substrate, regardless of its actual three-dimensional spatial orientation. The terms "vertical" and "normal" refer to a direction in the frame of reference perpendicular to the horizontal plane, as just defined. The term "lateral" refers to a direction in the frame of reference within the horizontal plane.

A feature "connected" or "coupled" to or with another feature may be directly connected or coupled to or with the other feature or, instead, one or more intervening features may be present. A feature may be "directly connected" or "directly coupled" to or with another feature if intervening features are absent. A feature may be "indirectly connected" or "indirectly coupled" to or with another feature if at least one intervening feature is present. A feature "on" or "contacting" another feature may be directly on or in direct contact with the other feature or, instead, one or more intervening features may be present. A feature may be "directly on" or in "direct contact" with another feature if intervening features are absent. A feature may be "indirectly on" or in "indirect contact" with another feature if at least one intervening feature is present. Different features may "overlap" if a feature extends over, and covers a part of, another feature.

The descriptions of the various embodiments of the present invention have been presented for purposes of illustration but are not intended to be exhaustive or limited to the embodiments disclosed. Many modifications and variations will be apparent to those of ordinary skill in the art without departing from the scope and spirit of the described embodiments. The terminology used herein was chosen to best explain the principles of the embodiments, the practical application or technical improvement over technologies found in the marketplace, or to enable others of ordinary skill in the art to understand the embodiments disclosed herein.

## Claims

1. A structure for a photonic chip, the structure comprising:
a photonic component;
a first waveguide core including a first section coupled to the photonic component, the first section of the first waveguide core having a first length; and
a second waveguide core including a first section coupled to the photonic component, the first section of the second waveguide core having a second length that is greater than the first length.

2. The structure of claim 1 wherein the photonic component is a photodetector that includes an anode, a cathode, and a semiconductor layer configured to absorb light of a given wavelength.

3. The structure of claim 2 wherein the first waveguide core includes a second section that couples the first section of the first waveguide core to the photodetector, and the second waveguide core includes a second section that couples the first section of the second waveguide core to the photodetector.

4. The structure of claim 3 wherein the semiconductor layer is disposed laterally between the second section of the first waveguide core and the second section of the second waveguide core, and, optionally, wherein the semiconductor layer includes a first chamfered surface adjacent to the second section of the first waveguide core, and the semiconductor layer includes a second chamfered surface adjacent to the second section of the second waveguide core.

5. The structure of claim 1 wherein the photonic component is an absorber that includes a semiconductor layer configured to absorb light of a given wavelength.

6. The structure of claim 5 wherein the first waveguide core includes a second section that couples the first section of the first waveguide core to the absorber, and the second waveguide core includes a second section that couples the first section of the second waveguide core to the absorber.

7. The structure of claim 6 wherein the semiconductor layer is disposed laterally between the second section of the first waveguide core and the second section of the second waveguide core, and, optionally, wherein the semiconductor layer includes a first chamfered surface adjacent to the second section of the first waveguide core, and the semiconductor layer includes a second chamfered surface adjacent to the second section of the second waveguide core.

8. The structure of claim 1 wherein the photonic component is an absorber that includes a spiral section comprising a semiconductor material configured to absorb light of a given wavelength.

9. The structure of one of claims 1 to 8 wherein the first waveguide core includes a third section connected to the first section of the first waveguide core, the second waveguide core includes a third section connected to the first section of the second waveguide core, and further comprising:
a third waveguide core including a section disposed laterally between the third section of the first waveguide core and the third section of the second waveguide core.

10. The structure of one of claims 1 to 9 wherein the first section of the first waveguide core and the first section of the second waveguide core have a length difference between the first length and the second length that is configured to cause propagating light to have a phase difference equal to pi or a multiple of pi.

11. The structure of one of claims 1 to 10 further comprising:
a first thermo-optic phase shifter associated with a portion of the first section of the second waveguide core; and/or
a second thermo-optic phase shifter associated with a portion of the first section of the first waveguide core.

12. The structure of one of claims 1 to 10 further comprising:
a first electro-optic phase shifter associated with a portion of the first section of the second waveguide core; and/or
a second electro-optic phase shifter associated with a portion of the first section of the first waveguide core.

13. The structure of one of claims 1 to 7 further comprising:
a first multi-mode interference coupler having an output port coupled to the first section of the second waveguide core; and, optionally, further comprising a second multi-mode interference coupler having an output port coupled to an input port of the first multi-mode interference coupler.

14. The structure of one of claims 1 to 7 further comprising:
a third waveguide core including a section coupled to the photonic component, the section of the third waveguide core having a third length; and
a fourth waveguide core including a section coupled to the photonic component, the section of the fourth waveguide core having a fourth length that is greater than the third length.

15. A method of forming a structure for a photonic chip, the method comprising:
forming a photonic component;
forming a first waveguide core including a first section coupled to the photonic component, wherein the first section of the first waveguide core has a first length; and
forming a second waveguide core including a first section coupled to the photonic component, wherein the first section of the second waveguide core has a second length that is greater than the first length.
